# EUROPEAN PATENT SPECIFICATION

(11) **EP 4 471 888 B1**
(45) Date of publication and mention of the grant of the patent: **19.11.2025**
(21) Application number: 24173948.1
(22) Date of filing: 02.05.2024
(51) Int. Cl.: H01M 4/13, H01M 4/587, H01M 4/485, H01M 4/62, H01M 4/505, H01M 4/36, H01M 4/583, H01G 11/24, H01G 11/06, H01G 11/36, H01G 11/38, H01G 11/50, H01G 11/62, H01M 4/131, H01M 10/0568, H01M 4/02, H01M 10/0525

(54) **ENERGY STORAGE CELLS WITH RAPID CHARGE AND DISCHARGE CAPABILITIES HAVING NB2O5 AND ACTIVATED CARBON AS NEGATIVE ACTIVE MATERIAL AND LITHIUM MANGANESE OXIDE AS POSITIVE ACTIVE MATERIAL**
ENERGIESPEICHERZELLEN MIT SCHNELLEN LADE- UND ENTLADEKAPAZITÄTEN MIT NB2O5 UND AKTIVKARBON ALS NEGATIVEM AKTIVSTOFF UND LITHIUMMANGANOXID ALS POSITIVEM ELEKTROD
CELLULES DE STOCKAGE D'ÉNERGIE AVEC CAPACITÉS DE CHARGE ET DE DÉCHARGE RAPIDES AYANT DU NB2O5 ET DU CARBONE ACTIVÉ COMME MATERIEL NÉGATIF ACTIF ET DE L'OXYDE DE MANGANÈSE DE LITHIUM COMME ÉLECTRODE POSITIVE

(30) Priority: 01.06.2023 DE 102023114484
(43) Date of publication of application: 04.12.2024
(73) Proprietor: Skeleton Technologies GmbH, 04420 Markranstädt (DE)
(72) Inventor: Pattarachai, Srimuk, 01900 Großröhrsdorf (DE)
(74) Representative: KASTEL Patentanwälte PartG mbB

(56) References cited:
- CN-B- 101 268 582
- JP-A- 2012 114 027
- JP-A- 2014 209 443
- KR-A- 20160 110 140

## Description

The invention relates to energy storage cells, e.g. hybrid supercapacitors, with fast charge and discharge capabilities as well as their components, such as electrodes and electrolytes.

In recent years the demand for energy storage cells has substantially increased, be it in the field of automobiles, industrial applications, mass transportation, or grid regulation. The cells may serve as traction battery, intermediate energy storage for kinetic energy recovery systems, or energy storage for mechanical assistance systems, such as anti-skid systems or active shock absorbers. In grid regulation the cells store excess produced energy, in particular excess wind or solar energy, and help closing the energy gap in situations of high demand. For all these applications it is useful to have a type of energy storage cell that allows for fast charging or discharging, or in other words a high peak power.

Energy storage cells may generally be divided into batteries and capacitors. While batteries store electric energy in chemical form, capacitors usually store electric energy in the electric field. Batteries are usually not capable of achieving the peak powers that are required for the abovementioned applications.

Ultracapacitors, also known as supercapacitors, are a kind of capacitor and can be separated into double-layer capacitors and pseudocapacitors. The former store electrical energy in an electrostatic double-layer, whereas the latter store the electrical energy electrochemically, but in a different manner than batteries. Recently, hybrid (super)capacitors have been developed that combine the features of double-layer capacitors and pseudocapacitors.

These capacitors usually exhibit a large voltage variation during charging and discharging, whereas batteries do not. The main advantage for capacitors is that they are great for applications that require large peak powers or - in other words - a large energy transfer within very short time.

This capability, in particular for supercapacitors, is not without limits, since in general the actually usable capacity depends on the discharge current: the larger the current, the smaller the usable capacity.

Among the materials being used for lithium batteries on the positive electrode, lithium manganese oxide (LMO) as recently gained a considerable attention in particular for high-rate applications, in part due safety aspects of the resulting devices. However, one drawback for the long-life cycling stability of these batteries is the dissolution of manganese ions into the electrolyte and consequently the loss of capacity.

JP 2014 209 443 A discloses a nonaqueous electrolyte battery with a niobium composite oxide (TiNb₂O₇) as the active material, enhancing energy density and charge/discharge performance. It aims to replace traditional carbon-based anodes, reducing dendrite formation and improving cycle life.

JP 2012 114 027 A discloses a negative electrode material for a metal secondary battery that contains MgH and NbO in contact with the MgH.

CN 101 268 582 B discloses a flat organic electrolyte secondary battery that includes a negative electrode, a positive electrode, an organic electrolyte, a separator, a sealing plate, and a positive electrode can gasket. The negative electrode includes an oxide capable of reversibly absorbing and desorbing lithium ions as a negative electrode active material. The sealing plate is in contact with the negative electrode and serves as a negative electrode terminal. The gasket is interposed between the positive electrode can and the sealing plate.

KR 2016 0 110 140 A discloses an active material that contains a niobium composite oxide. The niobium composite oxide is represented by a general formula of LiₓM_{(1-y)}Nb_{y}Nb₂O_{(7+δ)}. In the general formula, M is at least one selected from the group consisting of Ti and Zr, and x, y and δ satisfy 0≦x≦6, 0≦y≦1, and -1≦δ≦1, respectively. The niobium composite oxide contains nitrogen atoms in a content of 0.01% to 3.02% by mass.

US 5 258 245 A discloses a lithium battery comprising a positive electrode mainly of vanadium pentoxide, a negative electrode mainly of lithium doped niobium pentoxide, and an electrolyte mainly of an anhydrous solvent with dissolved lithium salt.

US 2021 / 0 110 980 A1, US 2021 / 0 110 979 A1, and US 2021 / 0 218 048 A1 disclose cell concepts that employ three or four electrodes.

DE 10 2018 202 929 A1 discloses a hybrid supercapacitor.

It is the object of the invention to improve ultracapacitors with respect to their electrical properties, preferably the actually usable capacity or charge/discharge speed. It is furthermore object of the invention to employ niobium-comprising lithium manganese oxide as positive active material for improved cycling stability.

The invention provides a negative active material composition for a negative electrode of an energy storage cell, the composition consisting of:
- 70 wt% to 99 wt% of negative active material;
- 1 wt% to 10 wt% of at least one binder;
- optionally up to 10 wt% in total of at least one conductive additive; and
- optionally less than 10 wt% in total of other components or impurities,
wherein the negative active material consists of Nb₂O₅ particles and activated carbon (AC) particles.

The invention provides a method for manufacturing a negative electrode for an energy storage cell, the method comprising:
a) provide 1 wt% to 20 wt% binder in a mixing vessel;
b) mixing in the vessel, so as to obtain a slurry:
   - 60 wt% to 99 wt% of negative active material that includes 1 wt% to 99 wt% of Nb₂O₅ particles and the remainder up to 100 wt% of activated carbon (AC) particles;
   - optionally up to 10 wt% in total of at least one conductive additive; and
   - optionally less than 10 wt% in total of other components;
c) coating a conductive electrode substrate with the slurry and heating the coated electrode substrate, thereby generating the negative electrode.

In an embodiment all binders have a total proportion of 2 wt% to 4 wt% and the proportion of the negative active material is 76 wt% to 98 wt%. In an embodiment each binder has a proportion of no more than 2 wt%.

In an embodiment, the amount of Nb₂O₅ particles is 30 wt%, 40 wt%, 50 wt%, 60 wt%, or 70 wt%. In an embodiment, the amount of AC particles is 30 wt%, 40 wt%, 50 wt%, 60 wt%, or 70 wt%.

In an embodiment the negative active material consists of Nb₂O₅ particles and AC particles. In an embodiment the Nb₂O₅ particles mostly consist of orthorhombic Nb₂O₅. In an embodiment the Nb₂O₅ particles consists of more than 90 wt% of orthorhombic Nb₂O₅.

In an embodiment the Nb₂O₅ particles have a particle size of D90 1 µm to 100 µm, preferably of 2 µm to 60 µm, more preferably of 10 µm to 30 µm. In an embodiment the Nb₂O₅ particles have a particle size of D10 0.05 µm to 10 µm, preferably 0.3 µm to 5 µm, more preferably of 0.3 µm to 3 µm.

In an embodiment the AC particles have a BET nitrogen surface area of at least 60 m²/g, preferably of at least 1000 m²/g.

In an embodiment the AC particles have a particle size D90 of 5 µm to 30 µm, preferably of 5 µm to 20 µm. In an embodiment the AC particles have a particle size of D10 1 µm to 2 µm. In an embodiment the AC particles comprise carbide derived carbon (CDC) particles.

In an embodiment each conductive additive is selected from a group consisting of carbon black, carbon nanotubes (CNTs), graphene, and mixtures thereof. Preferably, the CNTs are multi-walled CNTs (MWCNTs).

In an embodiment the composition includes 1 wt% to 10 wt% carbon black. In an embodiment the composition includes 1 wt% to 8 wt% carbon black. In an embodiment the composition includes 1 wt% to 3 wt% carbon black. In an embodiment the composition includes 2 wt% to 6 wt% carbon black. In an embodiment the composition includes 3 wt% to 7 wt% carbon black.

In an embodiment the composition includes 0.3 wt% to 2 wt% CNTs. In an embodiment the composition includes 0.3 wt% to 1.0 wt% CNTs.

The invention provides a positive active material composition for a positive electrode of an energy storage cell, the composition consisting of:
- 0.5 wt% to 10 wt% carbon black (CB);
- 1 wt% to 20 wt% of at least one binder;
- 56 wt% to 98.5 wt% of positive active material that for the most part includes or for the most part consists of niobium-comprising Nb-LiMn₂O₄ (Nb-LMO) particles, wherein optionally the amount of niobium in the positive active material ranges between 0.001 wt% - 5.0 wt% based on the mass of lithium manganese oxide;
- optionally 0.1 wt% to 2 wt% carbon nanotubes (CNTs);
- optionally 0.1 wt% to 2 wt% graphene; and
- optionally less than 10 wt% of other components or impurities.

The invention provides a method for manufacturing a positive electrode for an energy storage cell, the method comprising:
a) provide 1 wt% to 20 wt% binder in a mixing vessel;
b) mixing in the vessel, so as to obtain a slurry:
   - 0.5 wt% to 10 wt% carbon black (CB);
   - 56 wt% to 98.5 wt% of positive active material that consists of Nb-LiMn₂O₄ (Nb-LMO) particles;
   - optionally 0.1 wt% to 2 wt% carbon nanotubes (CNTs); and
   - optionally 0.1 wt% to 2 wt% graphene;
c) coating a conductive electrode substrate with the slurry and heating the coated electrode substrate, thereby generating the positive electrode.

In an embodiment the Nb-LMO particles have a particle size of D90 of 30 µm to 40 µm. Preferably, the Nb-LMO particles have a particle size of D50 of 10 µm to 20 µm. Preferably, the Nb-LMO particles have a particle size of D10 of 3 µm to 9 µm.

In an embodiment the proportion of CNTs deviates from the proportion of graphene or vice versa by less than 10%. In an embodiment the proportions of CNTs and graphene are identical.

The invention provides an energy storage cell for storing electrical energy as defined by the features of claim 1, the cell comprising a plurality of electrodes that are immersed in an organic anhydrous electrolyte, wherein at least one electrode is configured as a negative electrode and at least one electrode is configured as a positive electrode, wherein the negative electrode includes a negative electrode material composition as previously described or obtainable by a previously described method. Alternatively or additionally positive electrode includes a positive electrode material composition as previously described or obtainable by a previously described method.

In an embodiment the electrolyte consists of 80 vol% to 95 vol% acetonitrile, 5 vol% to 20 vol% ethylenecarbonate, and a lithium conductive salt.

The invention provides an organic anhydrous electrolyte composition for an energy storage cell, the composition consisting of
- 80 vol% to 95 vol% acetonitrile;
- 5 vol% to 20 vol% ethylenecarbonate; and added to that
- a lithium conductive salt.

In an embodiment the proportion of acetonitrile is 85 vol% to 93 vol% and the proportion of ethylenecarbonate is 7 vol% to 15 vol%. In an embodiment the proportion of acetonitrile is 88 vol% to 93 vol% and the proportion of ethylenecarbonate is 7 vol% to 12 vol%. In an embodiment the proportion of acetonitrile is 89 vol% to 91 vol% and the proportion of ethylenecarbonate is 9 vol% to 11 vol%.

In an embodiment the conductive lithium salt has a concentration of 0.1 mol/l to 3 mol/l.

In an embodiment the lithium conductive salt is selected from a group consisting of lithium perchlorate (LiClO₄), lithium tetrafluoroborate (LiBF₄), lithium hexafluorophosphate (LiPF₆), lithium hexafluoroarsenate (LiAsF₆), lithium trifluoromethanesulfonate (LiSO₃CF₃), lithium bis(trifluoromethylsulfonyl)imide (LiN(SO₂CF₃)₂), lithium bis(pentafluoroethanesulfonyl)imide (LiN(SO₂C₂F₅)₂), lithium bis(oxalato)borate (LiBOB, LiB(C₂O₄)₂), lithium difluoro(oxalato)borate (LiBF₂(C₂O₄)), lithium tris(pentafluoroethyl)trifluorophosphate (LiPF₃(C₂F₅)₃) and mixtures thereof. In an embodiment the lithium conductive salt is LiPF₆.

The invention provides an energy storage cell for storing electrical energy, the cell comprising a positive electrode and a negative electrode immersed in an organic anhydrous electrolyte,
wherein the negative electrode includes a negative active material composition that has Nb₂O₅ particles and activated carbon (AC) particles;
wherein the positive electrode includes a positive active material composition that for the most part has Nb-LiMn₂O₄ (Nb-LMO) particles.

In an embodiment the negative active material composition includes a negative active material that consists of Nb₂O₅ particles and AC particles.

In an embodiment the amount of Nb₂O₅ particles and the amount of AC particles is selected from a group consisting of 30 wt%, 40 wt%, 50 wt%, 60 wt%, and 70 wt%, such that the total amount is 100 wt%.

In an embodiment the negative electrode composition and/or the positive electrode composition include at least one conductive additive.

In an embodiment the at least one conductive additive is selected from a group consisting of carbon black (CB), carbon nanotubes (CNTs), graphene, and mixtures thereof.

In an embodiment the negative active material composition consists of more than 50 wt%, preferably of more than 60 wt%, negative active material. In an embodiment the positive active material composition consists of more than 50 wt%, preferably of more than 90 wt%, preferably of more than 95 wt%, preferably of 97 wt% or more, positive active material.

In an embodiment the Nb₂O₅ particles have a particle size of D90 1 µm to 100 µm, preferably 2 µm to 60 µm, more preferably 10 µm to 30 µm. In an embodiment the Nb₂O₅ particles have a particle size of D10 0.05 µm to 10 µm, preferably 0.3 µm to 5 µm, more preferably 0.3 µm to 3 µm
In an embodiment the AC particles have a BET nitrogen surface area of at least 60 m²/g, preferably of at least 1000 m²/g.

In an embodiment the AC particles have a particle size D90 of 5 µm to 30 µm, preferably 5 µm to 20 µm. In an embodiment the AC particles have a particle size of D10 1 µm to 2 µm.

In an embodiment the AC particles comprise carbide derived carbon particles.

In an embodiment CNTs are multi-walled CNTs (MWCNTs).

In an embodiment the negative electrode composition includes 1 wt% to 10 wt% carbon black. In an embodiment the negative electrode composition includes 1 wt% to 8 wt% carbon black. In an embodiment the negative electrode composition includes 1 wt% to 3 wt% carbon black. In an embodiment the negative electrode composition includes 2 wt% to 6 wt% carbon black. In an embodiment the negative electrode composition includes 3 wt% to 7 wt% carbon black.

In an embodiment the positive electrode composition includes 1 wt% to 10 wt% carbon black. In an embodiment the positive electrode composition includes 1 wt% to 8 wt% carbon black. In an embodiment the positive electrode composition includes 1 wt% to 3 wt% carbon black. In an embodiment the positive electrode composition includes 2 wt% to 6 wt% carbon black. In an embodiment the positive electrode composition includes 3 wt% to 7 wt% carbon black.

In an embodiment the negative electrode composition includes 0.3 wt% to 2 wt%, preferably 0.3 wt% to 1.0 wt% CNTs. In an embodiment the positive electrode composition includes 0.3 wt% to 2 wt%, preferably 0.3 wt% to 1.0 wt% CNTs.

In an embodiment the negative electrode composition includes 0.3 wt% to 2 wt%, preferably 0.3 wt % to 1.0 wt%, graphene. In an embodiment the positive electrode composition includes 0.3 wt% to 2 wt%, preferably 0.3 wt % to 1.0 wt%, graphene.

In an embodiment the proportion of CNTs deviates from the proportion of graphene or vice versa by less than 10%. In an embodiment the proportions of CNTs and graphene are identical.

In an embodiment the electrolyte includes a lithium conductive salt, 80 vol% to 95 vol% acetonitrile, and 5 vol% to 20 vol% ethylenecarbonate.

In an embodiment the lithium conductive salt is selected from a group consisting of lithium perchlorate (LiClO₄), lithium tetrafluoroborate (LiBF₄), lithium hexafluorophosphate (LiPF₆), lithium hexafluoroarsenate (LiAsF₆), lithium trifluoromethanesulfonate (LiSO₃CF₃), lithium bis(trifluoromethylsulfonyl)imide (LiN(SO₂CF₃)₂), lithium bis(pentafluoroethanesulfonyl)imide (LiN(SO₂C₂F₅)₂), lithium bis(oxalato)borate (LiBOB, LiB(C₂O₄)₂), lithium difluoro(oxalato)borate (LiBF₂(C₂O₄)), lithium tris(pentafluoroethyl)trifluorophosphate (LiPF₃(C₂F₅)₃) and mixtures thereof. In an embodiment the lithium conductive salt is LiPF₆.

The Nb₂O₅ particles allow redox reactions and intercalation of lithium ions into their crystal structure. The activated carbon particles include micropores that provide a storage space for the metallic lithium. Due to the mixture of both, the lithium has a rather short path length to the sites where redox reactions may occur during charging or discharging. As a result, the equivalent series resistance (ESR) can be reduced to below 1.5 mΩ for 1 s (dis-)charging time. For shorter (dis-)charging times of 10 ms the ESR can be reduced further to below 0.5 mΩ.

Experiments of the Applicant found that particular compositions of the conductive additives allow improvement of the available gravimetric capacity depending on the gravimetric current. The gravimetric capacity is the amount of milliampere hours per gram of active material, whereas the gravimetric current is the amount of milliamperes per gram of active material.

The addition of either graphene or CNTs improves the available gravimetric capacity for gravimetric currents below 400 mA/g. Surprisingly, the addition of CNTs and graphene with an equal amount works best, in particular for the positive electrode. Here, a gravimetric capacity between 80 mAh/g and 120 mAh/g can be achieved for gravimetric currents of up to 1000 mA/g. The largest gain is obtained for gravimetric currents of more than 200 mA/g, where the available gravimetric capacity is about 2-fold to 5-fold compared to an electrode with only one conductive additive.

An increase by a factor of two of the available gravimetric capacity for the negative electrode can be achieved with the addition of CNTs to carbon black alone. Using CNTs allows the available gravimetric capacity to be above 80 mAh/g for gravimetric currents up to 1000 mA/g.

Another improvement is the available cell voltage. Lithium ion batteries (LIB) may have a cell voltage of about 4.2 V taking into account sacrificial additives in the electrolyte that passivate the electrode. This is undesirable here, since the passivation reduces the available peak power capacity. Due to the use of lithi-ummanganate (LiMn₂O₅) a cell voltage of up to 3.0 V is possible. Further improvement is possible with the electrolyte composition, which is stable enough to achieve these voltages.

The active materials of the electrodes allow a higher electrode density, which at least for ultracapacitors translates to a higher energy density. Overall, Applicant found that the gravimetric energy density, i.e. watthours per kilogram of active material, can be doubled compared to conventional cells. While the gravimetric energy density is dependent on the gravimetric cell power, i.e. watts per kilogram of active material, the improvement is irrespective of the gravimetric cell power. Thus, an overall improvement of the electrical properties can be achieved for a wide range of applications.

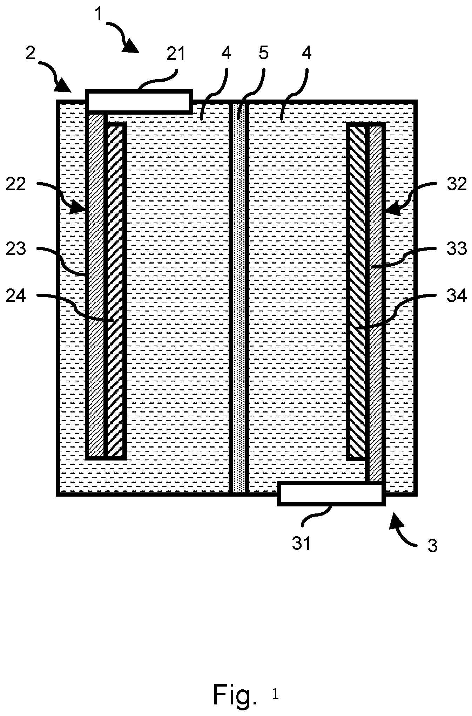

Embodiments of the invention are described in more detail with reference to the accompanying schematic drawings. Therein the only Fig. schematically depicts a cross-section through an energy storage cell according to the invention.

### Energy storage cell

As depicted in the Fig., an energy storage cell 1 may be configured as a hybrid ultracapacitor. The energy storage cell 1 is preferably formed as a cylinder. The energy storage cell 1 comprises a first electrode arrangement 2 and a second electrode arrangement 3. Both electrode arrangements are immersed in an organic anhydrous electrolyte 4. Furthermore, the energy storage cell 1 comprises a separator 5 that is interposed between the first and second electrode arrangements 2, 3.

It should be noted that the energy storage cell 1 usually contains a plurality of windings of the first and second electrode arrangements 2, 3 about the cylinder axis, however for the sake of clarity only portions are shown here.

The first electrode arrangement 2 comprises an anode terminal 21. The anode terminal 21 is arranged so that an external electric contact can be formed. The first electrode arrangement 2 comprises a negative electrode 22. The negative electrode 22 is electrically coupled to the anode terminal 21. The negative electrode 22 includes a current collector 23 that is made of metal, preferably aluminium. The current collector 23 contacts the anode terminal 21. The negative electrode 22 includes a negative electrode material 24.

The second electrode arrangement 3 comprises a cathode terminal 31. The cathode terminal 31 is arranged so that an external electric contact can be formed. The second electrode arrangement 3 comprises a positive electrode 32. The positive electrode 32 is electrically coupled to the anode terminal 31. The positive electrode 32 includes a current collector 33 that is made of metal, preferably aluminium. The current collector 33 contacts the cathode terminal 31. The positive electrode 32 includes a positive electrode material 34.

### Manufacturing the negative electrode - Example 1

Carboxymethyl cellulose (CMC) binder is provided and optionally mixed with water. The proportion of the CMC binder is 2 wt%.

Carbon black (CB) is added as a first conductive additive with a proportion of 5 wt%.

Activated carbon (AC) particles and Nb₂O₅ particles are added as a negative active material. The Nb₂O₅ particles are made of orthorhombic Nb₂O₅. The negative active material makes up the remainder to 100 wt%, apart from unavoidable impurities. The negative active material consists of 60 wt% Nb₂O₅ particles and 40 wt% AC particles.

The AC particles have a particle size of D90 of 10 µm to 15 µm and the Nb₂O₅ particles have a particle size of D90 of 0.5 µm to 60 µm. The AC particles can be carbide derived carbon such as from SiC or TiC and have a BET nitrogen surface are of more than 1000 m²/g.

Styrene butadiene rubber (SBR) is added as a second binder with a proportion of 2 wt%.

After mixing a slurry is obtained that can be distributed onto a conductive electrode substrate, such as the current collector 23.

The coated substrate is then heated, so as to remove possible solvents and cure the binder, thereby forming the negative electrode 22.

### Example 2

The method of Example 1 is repeated, apart from the proportions of some components of the composition. The binders remain unchanged. CB is added with a proportion of 4 wt%. Carbon nanotubes (CNTs) are added as a second conductive additive with a proportion of 0.5 wt% together with the CB. The proportion of the negative active material is adapted accordingly.

### Example 3

The method of Example 2 is repeated, apart from the proportions of some components of the composition. The binders remain unchanged. Carbon black (CB) is added with a proportion of 2 wt%. CNTs are added with a proportion of 0.5 wt%. The proportion of the negative active material is adapted accordingly.

Subsequent Table 1 compiles the available gravimetric capacity for negative electrodes according to Examples 1 to 3.

**Table 1**

| | gravimetric capacity (mAh/g) | | |
|---|---|---|---|
| gravimetric current (mA/g) | Example 1 | Example 2 | Example 3 |
| 50 | 76 | 143 | 74 |
| 100 | 69 | 127 | 57 |
| 200 | 64 | 115 | 50 |
| 500 | 53 | 97 | 33 |
| 1000 | 42 | 82 | 23 |

### Example 4

The methods of Example 1 to Example 3 are repeated, wherein the amount of Nb₂O₅ particles is changed to 30 wt%, 40 wt%, 50 wt%, and 70 wt%. The amount of AC particles is adapted accordingly to 70 wt%, 60 wt%, 50 wt%, and 30 wt%.

### Example 5

The methods of Example 1 to Example 3 are repeated, wherein the particle size of the AC particles is changed to D90 of 20 µm to 50 µm.

### Manufacturing the positive electrode - Example 1

Carboxymethyl cellulose (CMC) binder is provided and optionally mixed with water. The proportion of the CMC binder is 4 wt%.

Carbon black (CB) is added with a proportion of 2 wt%. Carbon nanotubes (CNTs) are added with a proportion of 1 wt%.

Nb-LiMn₂O₄ (Nb-LMO) particles are added as a positive active material and make up the bulk of the positive electrode material.

Acrylic binder is added as a second binder with a proportion of 2 wt%.

After mixing a slurry is obtained that can be distributed onto a conductive electrode substrate, such as the current collector 33.

The coated substrate is then heated, so as to remove possible solvents and cure the binder, thereby forming the positive electrode 32.

### Example 2

The method of Example 1 is repeated, apart from the proportions of some components of the composition. The portion of CMC binder is 2 wt%, the portion of the acrylic binder is 2 wt%. Carbon black (CB) is added with a proportion of 2 wt%. Carbon nanotubes (CNTs) are added with a proportion of 1 wt%. The electrolyte consists of 90 vol % acetonitrile and 10 vol % ethylene carbonate, as well as 1M LiPF6. Subsequent Table 2 shows the corresponding electrochemical performance.

### Example 3

The method of Example 1 is repeated, apart from the proportions of some components of the composition. The portion of CMC binder is 2 wt%, the portion of the acrylic binder is 2 wt%. 2 wt% CB are used, 0,5 wt% CNTs are used, 0,5 wt% of Graphene is used. The electrolyte consists of 50 vol % acetonitrile and 50 vol % ethylene carbonate, as well as 1M LiPF6. Subsequent Table 2 shows the corresponding electrochemical performance.

**Table 2**

| | Example 2 | | Example 3 | |
|---|---|---|---|---|
| | Energy (Wh/Kg) | Power (W/Kg) | Energy (Wh/Kg) | Power (W/Kg) |
| Current in Ampere (A) | | | | |
| 10 | 128.75 | 20.01 | 97.59 | 25.58 |
| 250 | 75.75 | 444.74 | 63.22 | 610.24 |
| 500 | 62.42 | 859.40 | 52.31 | 1197.38 |
| 1000 | 38.08 | 1536.74 | 40.35 | 2330.92 |
| 2000 | 18.25 | 2746.48 | 26.65 | 4532.87 |
| 4000 | 19.47 | 6113.87 | 15.07 | 8924.16 |

### Composition of electrolyte - Example 1

The organic anhydrous electrolyte 4 is obtained by mixing 90 vol % of acetonitrile (ACE) with 10 vol % of ethylenecarbonate (EC) and adding an amount of LiPF₆ so that its concentration in the liquid components is 1 mol/l.

### Example 2

The organic anhydrous electrolyte 4 is obtained by changing the amount of ACE to 85 vol%, 88 vol%, 89 vol%, 91 vol %, 93 vol%, and 95 vol% and adapting the amount of EC accordingly. The concentration of LiPF₆ remains unchanged.

### Example 3

The organic anhydrous electrolyte 4 is obtained by performing the mixing as described in Examples 1 and 2, wherein the concentration of LiPF₆ is changed to 0.5 mol/l, 1.5 mol/l, 2 mol/l, and 3 mol/l.

### Example 4

The organic anhydrous electrolyte 4 is obtained by performing the mixing as described in Examples 1 to 2, wherein LiPF₆ is replaced by one of the following conductive salts: lithium perchlorate (LiClO₄), lithium tetrafluoroborate (LiBF₄), lithium hexafluorophosphate (LiPF₆), lithium hexafluoroarsenate (LiAsF₆), lithium trifluoromethanesulfonate (LiSO₃CF₃), lithium bis(trifluoromethylsulfonyl)imide (LiN(SO₂CF₃)₂), lithium bis(pentafluoroethanesulfonyl)imide (LiN(SO₂C₂F₅)₂), lithium bis(oxalato)borate (LiBOB, LiB(C₂O₄)₂), lithium difluoro(oxalato)borate (LiBF₂(C₂O₄)), lithium tris(pentafluoroethyl)trifluorophosphate (LiPF₃(C₂F₅)₃), or mixtures thereof.

Overall it is found that the previously described measures allow an increase of up to 30 % in the charge rate compared to conventional cells with the same nominal capacity. Together with the lower ESR and increased energy density, the invention allows for a significant improvement of energy storage cells, such as hybrid ultracapacitors.

### List of reference signs:

- 1: energy storage cell
- 2: first electrode arrangement
- 3: second electrode arrangement
- 4: electrolyte
- 5: separator

- 21: anode terminal
- 22: negative electrode
- 23: current collector
- 24: negative electrode material

- 31: cathode terminal
- 32: positive electrode
- 33: current collector
- 34: positive electrode material

## Claims

1. An energy storage cell (1) for storing electrical energy, the cell (1) comprising a negative electrode (22) and a positive electrode (32) that are immersed in an organic anhydrous electrolyte (4),
wherein the negative electrode (22) includes a negative active material composition that has Nb₂O₅ particles and activated carbon (AC) particles;
wherein the positive electrode (32) includes a positive active material composition that for the most part comprises lithium manganese oxide material which includes for the most part lithium manganese oxide and 0.001 wt% to 5.0 wt% niobium based on the weight of the lithium manganese oxide.

2. The cell (1) according to claim 1, wherein the negative active material composition includes a negative active material that consists of Nb₂O₅ particles and AC particles.

3. The cell (1) according to any of the preceding claims, wherein the negative electrode composition and/or the positive electrode composition include at least one conductive additive.

4. The cell (1) according to claim 3, wherein the at least one conductive additive is selected from a group consisting of carbon black (CB), carbon nanotubes (CNTs), graphene, and mixtures thereof.

5. The cell (1) according to any of the preceding claims, wherein the negative active material composition consists of more than 50 wt%, preferably of more than 60 wt%, negative active material, and/or wherein the positive active material composition consists of more than 50 wt%, preferably of more than 90 wt%, preferably of more than 95 wt%, preferably of 97 wt% or more, positive active material.

6. The cell (1) according to any of the preceding claims, wherein the Nb₂O₅ particles have a particle size of D90 1 µm to 100 µm.

7. The cell (1) according to any of the preceding claims, wherein the AC particles have a **BET** nitrogen surface area of at least 60 m²/g, preferably of at least 1000 m²/g.

8. The cell (1) according to any of the preceding claims, wherein the AC particles have a particle size D90 of 5 µm to 30 µm.

9. The cell (1) according to any of the claims 4 to 8, wherein the negative electrode composition and/or the positive electrode composition include 1 wt% to 10 wt% carbon black.

10. The cell (1) according to any of the claims 4 to 9, wherein the negative electrode composition and/or the positive electrode composition include 0.3 wt% to 2 wt% CNTs.

11. The cell (1) according to any of the claims 4 to 10, wherein the negative electrode composition and/or the positive electrode composition include 0.3 wt% to 2 wt% graphene.

12. The cell (1) according to claim 10 and 11, wherein the proportion of CNTs deviates from the proportion of graphene or vice versa by less than 10%.

13. The cell (1) according to claim 12, wherein the proportions of CNTs and graphene are identical.

14. The cell (1) according to any of the preceding claims, wherein the electrolyte includes a lithium conductive salt, 80 vol% to 95 vol% acetonitrile, and 5 vol% to 20 vol% ethylenecarbonate.

15. The cell (1) according to claim 14, wherein the lithium conductive salt is selected from a group consisting of lithium perchlorate (LiClO₄), lithium tetrafluoroborate (LiBF₄), lithium hexafluorophosphate (LiPF₆), lithium hexafluoroarsenate (Li-AsF₆), lithium trifluoromethanesulfonate (LiSO₃CF₃), lithium bis(trifluoromethylsulfonyl)imide (LiN(SO₂CF₃)₂), lithium bis(pentafluoroethanesulfonyl)imide (LiN(SO₂C₂F₅)₂), lithium bis(oxalato)borate (LiBOB, LiB(C₂O₄)₂), lithium difluoro(oxalato)borate (LiBF₂(C₂O₄)), lithium tris(pentafluoroethyl)trifluorophos- phate (LiPF₃(C₂F₅)₃) and mixtures thereof.

## Patentansprüche

1. Energiespeicherzelle (1) zum Speichern elektrischer Energie, wobei die Zelle (1) eine negative Elektrode (22) und eine positive Elektrode (32) umfasst, die in einem organischen wasserfreien Elektrolyt (4) eingetaucht sind,
wobei die negative Elektrode (22) eine negative Aktivmaterialzusammensetzung umfasst, die Nb₂O₅-Partikel und Aktivkohlepartikel (AC) enthält;
wobei die positive Elektrode (32) eine positive Aktivmaterialzusammensetzung umfasst, die zum größten Teil Lithiummanganoxidmaterial umfasst, das zum größten Teil Lithiummanganoxid und 0,001 Gew.-% bis 5,0 Gew.-% Niobium, bezogen auf das Gewicht des Lithiummanganoxids, umfasst.

2. Zelle (1) nach Anspruch 1, wobei die negative Aktivmaterialzusammensetzung ein negatives Aktivmaterial umfasst, das aus Nb₂O₅-Partikeln und AC-Partikeln besteht.

3. Zelle (1) nach einem der vorstehenden Ansprüche, wobei die negative Elektrodenzusammensetzung und/oder die positive Elektrodenzusammensetzung mindestens einen Leitzusatz umfasst.

4. Zelle (1) nach Anspruch 3, wobei der mindestens ein Leitzusatz aus einer Gruppe ausgewählt ist, die aus Ruß (CB), Kohlenstoffnanoröhren (CNTs), Graphen und Mischungen davon besteht.

5. Zelle (1) nach einem der vorstehenden Ansprüche, wobei die negative Aktivmaterialzusammensetzung aus mehr als 50 Gew.-%, vorzugsweise mehr als 60 Gew.-%, negativem Aktivmaterial besteht und/oder wobei die positive Aktivmaterialzusammensetzung aus mehr als 50 Gew.-%, vorzugsweise mehr als 90 Gew.-%, vorzugsweise mehr als 95 Gew.-%, vorzugsweise 97 Gew.-% oder mehr, positivem Aktivmaterial besteht.

6. Zelle (1) nach einem der vorstehenden Ansprüche, wobei die Nb₂O₅-Partikel eine Partikelgröße von D90 1 µm bis 100 µm aufweisen.

7. Zelle (1) nach einem der vorstehenden Ansprüche, wobei die AC-Partikel eine BET-Stickstoffoberfläche von mindestens 60 m²/g, vorzugsweise von mindestens 1000 m²/g, aufweisen.

8. Zelle (1) nach einem der vorstehenden Ansprüche, wobei die AC-Partikel eine Partikelgröße D90 von 5 µm bis 30 µm aufweisen.

9. Zelle (1) nach einem der Ansprüche 4 bis 8, wobei die negative Elektrodenzusammensetzung und/oder die positive Elektrodenzusammensetzung 1 Gew.-% bis 10 Gew.-% Ruß enthält.

10. Zelle (1) nach einem der Ansprüche 4 bis 9, wobei die negative Elektrodenzusammensetzung und/oder die positive Elektrodenzusammensetzung 0,3 Gew.-% bis 2 Gew.-% CNTs enthält.

11. Zelle (1) nach einem der Ansprüche 4 bis 10, wobei die negative Elektrodenzusammensetzung und/oder die positive Elektrodenzusammensetzung 0,3 Gew.-% bis 2 Gew.-% Graphen enthält.

12. Zelle (1) nach Anspruch 10 und 11, wobei der Anteil an CNTs um weniger als 10 % vom Anteil an Graphen abweicht oder umgekehrt.

13. Zelle (1) nach Anspruch 12, wobei die Anteile von CNTs und Graphen identisch sind.

14. Zelle (1) nach einem der vorstehenden Ansprüche, wobei der Elektrolyt ein leitfähiges Lithiumsalz, 80 Vol.-% bis 95 Vol.-% Acetonitril und 5 Vol.-% bis 20 Vol.-% Ethylencarbonat enthält.

15. Zelle (1) nach Anspruch 14, wobei das leitfähiges Lithiumsalz aus einer Gruppe ausgewählt ist, die aus Lithiumperchlorat (LiClO₄), Lithiumtetrafluorborat (LiBF₄), Lithiumhexafluorophosphat (LiPF₆), Lithiumhexafluoroarsenat (LiAsF₆), Lithiumtrifluormethansulfonat (LiSO₃CF₃), Lithiumbis(trifluormethylsulfonyl)imid (LiN(SO₂CF₃)₂), Lithiumbis(pentafluorethanesulfonyl)imid (LiN(SO₂C₂F₅)₂), Lithiumbis(oxalato)borat (LiBOB, LiB(C₂O₄)₂), Lithiumdifluoro(oxalato)borat (LiBF₂(C₂O₄)), Lithiumtris(pentafluorethyl)trifluorophosphat (LiPF₃(C₂F₅)₃) und Mischungen daraus besteht.

## Revendications

1. Cellule de stockage d'énergie (1) destinée à stocker de l'énergie électrique, la cellule (1) comprenant une électrode négative (22) et une électrode positive (32) qui sont immergées dans un électrolyte organique anhydre (4),
dans laquelle l'électrode négative (22) comprend une composition de matière active négative qui comporte des particules de Nb₂O₅ et des particules de charbon actif (AC);
dans laquelle l'électrode positive (32) comprend une composition de matière active positive qui comprend pour l'essentiel une matière d'oxyde de manganèse et de lithium qui comprend pour l'essentiel de l'oxyde de manganèse et de lithium et 0,001 % en poids à 5,0 % en poids de niobium par rapport au poids de l'oxyde de manganèse et de lithium.

2. Cellule (1) selon la revendication 1, dans laquelle la composition de matière active négative comprend une matière active négative qui consiste en particules de Nb₂O₅ et en particules d'AC.

3. Cellule (1) selon l'une quelconque des revendications précédentes, dans laquelle la composition d'électrode négative et/ou la composition d'électrode positive comprennent au moins un additif conducteur.

4. Cellule (1) selon la revendication 3, dans laquelle ledit au moins un additif conducteur est choisi parmi un groupe comprenant du noir de carbone (CB), des nanotubes de carbone (CNTs), du graphène et des mélanges de ceux-ci.

5. Cellule (1) selon l'une quelconque des revendications précédentes, dans laquelle la composition de matière active négative est constituée de plus de 50 % en poids, de préférence de plus de 60 % en poids, de matière active négative, et/ou dans laquelle la composition de matière active positive est constituée de plus de 50 % en poids, de préférence de plus de 90 % en poids, de préférence de plus de 95 % en poids, de préférence de 97 % en poids ou plus, de matière active positive.

6. Cellule (1) selon l'une quelconque des revendications précédentes, dans laquelle les particules de Nb₂O₅ ont une taille de particule de D90 comprise entre 1 µm et 100 µm.

7. Cellule (1) selon l'une quelconque des revendications précédentes, dans laquelle les particules AC ont une surface spécifique **BET** d'azote d'au moins 60 m²/g, de préférence d'au moins 1000 mg²/g.

8. Cellule (1) selon l'une quelconque des revendications précédentes, dans laquelle les particules AC ont une taille de particules D90 de 5 µm à 30 µm.

9. Cellule (1) selon l'une quelconque des revendications 4 à 8, dans laquelle la composition d'électrode négative et/ou la composition d'électrode positive comprennent 1 % en poids à 10 % en poids de noir de carbone.

10. Cellule (1) selon l'une quelconque des revendications 4 à 9, dans laquelle la composition d'électrode négative et/ou la composition d'électrode positive comprennent 0,3 % en poids à 2 % en poids de CNTs.

11. Cellule (1) selon l'une quelconque des revendications 4 à 10, dans laquelle la composition d'électrode négative et/ou la composition d'électrode positive comprennent 0,3 % en poids à 2 % en poids de graphène.

12. Cellule (1) selon les revendications 10 et 11, dans laquelle la proportion de CNTs s'écarte de la proportion de graphène ou vice versa de moins de 10 %.

13. Cellule (1) selon la revendication 12, dans laquelle les proportions de CNTs et de graphène sont identiques.

14. Cellule (1) selon l'une quelconque des revendications précédentes, dans laquelle l'électrolyte comprend un sel conducteur de lithium, 80 % en volume à 95 % en volume d'acétonitrile et 5 % en volume à 20 % en volume de carbonate d'éthylène.

15. Cellule (1) selon la revendication 14, dans laquelle le sel conducteur de lithium est choisi parmi un groupe comprenant le perchlorate de lithium (LiClO₄), le tétrafluoroborate de lithium (LiBF₄), l'hexafluorophosphate de lithium (LiPF₆), l'hexafluoroarsénate de lithium (LiAsF₆), le trifluorométhanesulfonate de lithium (LiSO₃CF₃), le bis(trifluorométhylsulfonyl)imide de lithium (LiN(SO₂CF₃)₂), le bis(pentafluoroéthanesulfonyl)imide de lithium (LiN(SO₂C₂F₅)₂), le bis(oxalato)borate de lithium (LiBOB, LiB(C₂O₄)₂), le difluoro(oxalato)borate de lithium (LiBF₂(C₂O₄)), le tris(pentafluoroéthyl)trifluorophosphate de lithium (LiPF₃(C₂F₅)₃) et leurs mélanges.
